# EUROPÄISCHE PATENTANMELDUNG

(11) **EP 0 533 081 A1**
(43) Veröffentlichungstag der Anmeldung: **24.03.1993**
(21) Anmeldenummer: 92115660.0
(22) Anmeldetag: 14.09.1992
(51) Int. Cl.: B60D 1/46

(54) **Anhängevorrichtung für Zugmaschinen**

(30) Priorität: 17.09.1991 DE 4130829
(71) Anmelder: DEERE & COMPANY, Moline, Illinois 61265 (US)
(72) Erfinder: Halabiya, Sabah, W-6839 Rheinhausen (DE)
(74) Vertreter: Feldmann, Bernhard

(57) **Zusammenfassung**

Eine Anhängevorrichtung für Zugmaschinen, insbesondere für landwirtschaftliche oder Nutzfahrzeuge, zum Anhängen von Arbeitsgeräten mit Deichsel umfaßt wenigstens einen an dem Fahrgestell (10) der Zugmaschine um eine horizontale Achse (24) verschwenkbar angelenkten Abstandshalter (22). Dieser greift mit seinem freien Ende (26) im mittleren Bereich eines Hubhebels (30) an, der sich gegenüber dem Abstandshalter (22) um eine horizontale Achse (28) verschwenken läßt. Der Hubhebel (30) steht mit seinem ersten Ende (34) mit einem Anhängehaken (38) in Verbindung, der sich durch Verschwenken des Hubhebels (30) in seiner Höhe verstellen läßt. Um eine günstige Hubkurve (76) für den Anhängehaken (38) zu erreichen, ist an dem zweiten Ende (32) des Hubhebels (30) eine Gelenkstelle (40) vorgesehen, an der ein Hubmechanismus angreift, durch den sich das zweite Ende (32) des Hubhebels (30) im wesentlichen nach oben ziehen läßt. Der Hubhebel (30) wird durch den Hubmechanismus so geführt, daß der Anhängehaken (38) beim Anheben von der tiefsten Position aus sich zunächst im wesentlichen senkrecht nach oben und kurz vor Erreichen seiner Arbeitshöhe zurück in seine Arbeitsposition bewegt.

## Beschreibung

Die Erfindung betrifft eine Anhängevorrichtung für Zugmaschinen, insbesondere für landwirtschaftliche oder Nutzfahrzeuge, zum Anhängen von Arbeitsgeräten mit Deichsel. Die Anhängevorrichtung umfaßt wenigstens einen an dem Fahrgestell der Zugmaschine um eine horizontale Achse verschwenkbar angelenkten Abstandshalter. Dieser greift mit seinem freien Ende im mittleren Bereich eines Hubhebels an, der sich gegenüber dem Abstandshalter um eine horizontale Achse verschwenken läßt. Der Hubhebel steht mit seinem ersten Ende mit einem Anhängehaken in Verbindung, der sich durch Verschwenken des Hubhebels in seiner Höhe verstellen läßt. An dem zweiten Ende des Hubhebels ist eine Gelenkstelle vorgesehen.

Insbesondere landwirtschaftliche oder Nutzfahrzeuge, wie Akkerschlepper, enthalten häufig eine Anhängevorrichtung zum Anhängen von schleppbaren Arbeitsgeräten. Zu diesem Zweck ist an der Zugmaschine ein Anhängehaken vorgesehen, der zur Aufnahme einer Deichselöse des Arbeitsgerätes geeignet ist. Für Deichseln, die beim Ankoppeln vom Boden angehoben werden müssen, ist es vorteilhaft, den Anhängehaken höhenverstellbar am Nutzfahrzeug anzubringen, so daß beim Rückwärtsfahren der Zugmaschine die Deichselöse von dem Anhängehaken aufgenommen und die Ankopplung erfolgen kann. Nach dem Ankoppeln wird der Anhängehaken mit der Deichsel durch eine mechanische Vorrichtung angehoben.

Für das Ankoppeln sind insbesondere bei Zugmaschinen mit Zapfwelle Normvorschriften zu beachten. So legt beispielsweise die ISO 500 / 6489 fest, daß der Abstand in Fahrtrichtung der Zugmaschine zwischen Haken und Zapfwellenende 100 mm betragen soll. Damit liegt der Koppelpunkt relativ nahe hinter der Fahrzeugkabine und kann insbesondere in seiner abgesenkten Lage nicht immer vom Fahrersitz aus eingesehen werden. Dies ist jedoch zur Erleichterung des Anhängevorganges wünschenswert.

Durch die DE-PS-1 249 099 ist eine Kupplungsvorrichtung für Schlepper bekannt geworden, bei der unter dem Schlepperrumpf zwei Hebel angeordnet sind, deren jeweils eines Ende über einen Bolzen verschwenkbar am Schlepperrumpf befestigt ist. An dem jeweils anderen freien Ende befindet sich ein Zughaken. Durch eine Hubwelle, Hubarme, Ketten und Zugstangen lassen sich die Hebel anheben und absenken. Dabei beschreibt der Zughaken einen Kreisbogen um die Bolzenachse. In abgesenkter Stellung befindet sich der Zughaken damit nahe am Schlepperheck und ist vom Fahrersitz aus nicht mehr sichtbar.

Eine Anhängevorrichtung der eingangs genannten Art geht aus der EP-B1-0 184 489 hervor. Bei dieser bekannten Anhängevorrichtung ist an der Gelenkstelle, die sich am zweiten Ende des Hubhebels befindet, ein zweiter, gelenkig am Fahrgestell des Fahrzeuges montierter Abstandshalter befestigt. Durch die beiden Abstandshalter wird die Hubkurve des Anhängehakens beim Anheben und Absenken festgelegt. Das Anheben des Hubhebels erfolgt über eine Anhebeeinrichtung und eine Teleskopstange, die in der Nähe des Anhängehakens an der Hubstange angreift.

Bei dieser Anhängevorrichtung liegt der Hubhebel unter dem Fahrzeugrumpf und vermindert damit die Bodenfreiheit des Fahrzeuges. Ferner ist die Anordnung an dieser Stelle einer erhöhten Verschmutzungsgefahr während des Betriebs ausgesetzt. Zwar ragt bei abgesenktem Hubhaken dieser weiter über das Fahrzeugheck hinaus als in seiner arretierten Stellung und kann daher in seiner tiefsten Stellung vom Fahrersitz aus sichtbar sein. Beim Anheben wird der Hubhaken jedoch relativ rasch zurückgezogen und verschwindet aus dem Sichtbereich des Fahrers. Das bedeutet, der Fahrer kann eine Deichselöse nur mit erheblichen Schwierigkeiten einfangen, wenn die Deichsel nicht die tiefste Position der Anhängevorrichtung einnimmt.

Die der Erfindung zugrunde liegende Aufgabe wird darin gesehen, eine Anhängevorrichtung der eingangs genannten Art anzugeben, bei der die genannten Probleme überwunden werden. Insbesondere soll die Anhängevorrichtung kostengünstig herstellbar sein, den Anforderungen an Normungen gerecht werden und eine Hubkurve für den Anhängehaken aufweisen, die eine gute Beobachtbarkeit vom Fahrersitz beim Durchfahren des gesamten Hubbereiches ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Anhängevorrichtung ist aus einfachen zumeist laschenförmigen Teilen, die über Gelenkstellen miteinander verbunden werden, aufgebaut. Sie ist kostengünstig herstellbar und leicht zu montieren. Der Hubhebel ist nicht unter dem Fahrzeugrumpf, sondern hinter dem Fahrzeugheck angeordnet und im wesentlichen senkrecht ausgerichtet, wobei das obere Ende hinsichtlich der Fahrzeugausrichtung etwas weiter vorn liegt als das untere Ende. Daher wird in arretiertem Zustand die Bodenfreiheit des Fahrzeuges nicht beengt und die Verschmutzungsgefahr weitgehend vermieden.

Der Hubhebel läßt sich so führen, daß die Hubkurve des Anhängehakens beim Anheben zunächst einen senkrechten Verlauf nimmt und erst kurz vor Erreichen der Arbeitshöhe des Anhängehakens die Richtung ändert und in etwa horizontal in die Arbeitsposition einmündet. Diese Hubkurve ermöglicht beim Anheben oder Absenken eine ständige Sichtkontrolle der Koppelstelle vom Fahrersitz aus.

Eine besonders bevorzugte Ausgestaltung der Erfindung sieht vor, daß zwischen einem antreibbaren Hubarm und der Gelenkstelle des Hubhebels wenigstens zwei gelenkig miteinander verbundene Verbindungsglieder vorgesehen sind. Diese Glieder wirken wie eine Kette. Sie übertragen zwar Zugkräfte, können jedoch ausknicken, wenn der Anhängehaken in seiner Arbeitsposition arretiert ist und der Hubarm abgesenkt wird. Diese Eigenschaft ermöglicht es, daß der Hubarm oder eine den Hubarm antreibende Hubwelle auch zum Antrieb anderer Arbeitsorgane, beispielsweise von Lenkern, herangezogen werden kann, ohne daß die Komponenten der Anhängevorrichtung gelöst werden müßten.

Um eine günstige Hubkurve des Anhängehakens zu erreichen, ist es vorteilhaft, zwischen einem Hubarm und einem mit dem Hubhebel in Verbindung stehenden starren Verbindungsglied einen Anschlag vorzusehen, der in der ersten Bewegungsphase beim Anheben ein freies Verschwenken zwischen Hubarm und Verbindungsglied ermöglicht, in einer zweiten Bewegungsphase jedoch das Verbindungsglied mit dem Hubarm starrsetzt. Hierdurch wird in der zweiten Bewegungsphase der Angriffspunkt vom Ende des Hubarmes auf des Ende des Verbindungshebels verlagert und damit die Richtung der auf den verschwenkbaren Hubhebel angreifenden Kraft verändert.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung des Heckbereiches eines Fahrzeuges in Seitenansicht mit einer erfindungsgemäßen Anhängevorrichtung bei abgesenktem Anhängehaken,
- Fig. 2: eine Anhängevorrichtung gemäß Fig. 1 mit einem Anhängehaken in Arbeitsposition,
- Fig. 3: die schematische Darstellung einer Anhängevorrichtung gemäß Fig. 2 von der Fahrzeugrückseite aus gesehen und
- Fig. 4: eine Anhängevorrichtung wie in Fig. 1 gezeigt, bei der der Anhängehaken durch eine Führung abgestützt ist.

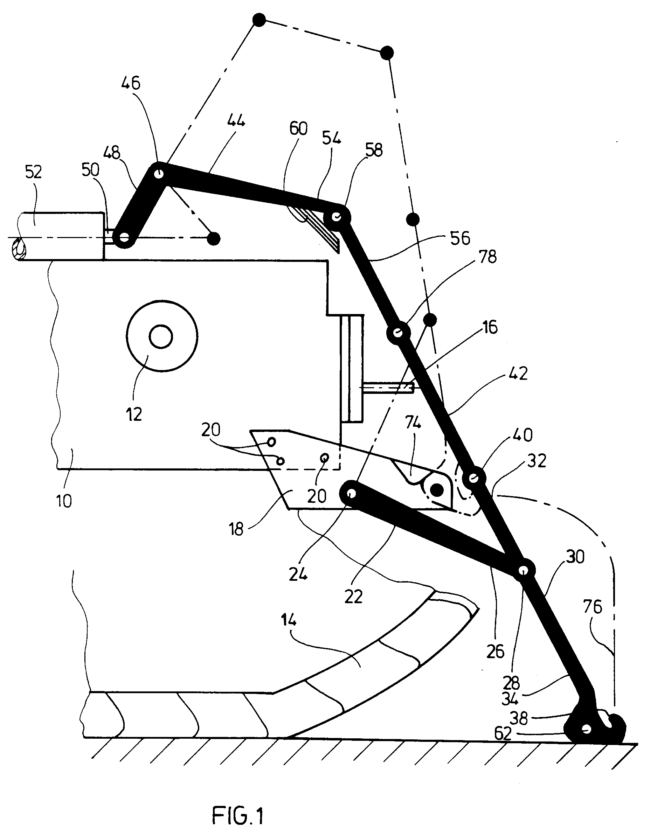

In der Mitte der Fig. 1 ist das Getriebegehäuse 10 eines nicht näher dargestellten Ackerschleppers dargestellt. Das Getriebegehäuse 10 ist Teil der Tragstruktur (Chassis) des Ackerschleppers. Die Bezugsziffer 12 deutet die Hinterachse an, die die ausschnittweise angedeuteten Hinterräder 14 antreibt.

Über den hinteren Bereich des Getriebegehäuses 10 steht eine Zapfwelle 16 hervor, die dem Antrieb eines nicht dargestellten geschleppten Arbeitsgerätes dient. Im hinteren unteren Bereich des Getriebegehäuses 10 ist hinsichtlich der Fahrtrichtung auf beiden Seiten je eine Halteplatte 18 über Verschraubungen 20 befestigt. Die Halteplatten 18 ragen nach hinten über die Getriebegehäusekontur hinaus.

An den Halteplatten 18 ist jeweils ein Ende eines Abstandshalters 22 befestigt, der um eine horizontal ausgerichtete Achse 24 in vertikaler Richtung verschwenkbar ist. Die freien Enden 26 der Abstandshalter 22 sind über horizontal ausgerichtete Schwenkachsen 28 mit dem jeweils mittleren Bereich von beidseits des Getriebegehäuses 10 angeordneten Hubhebeln 30 verbunden.

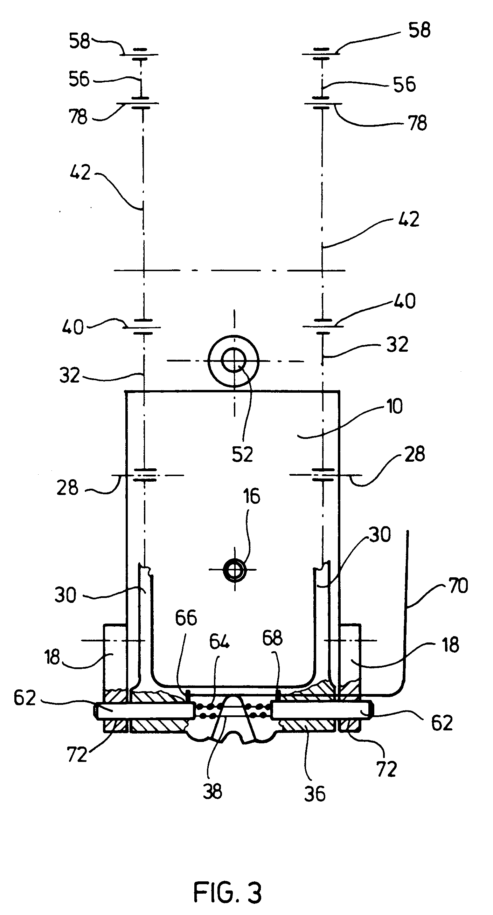

Die Hubhebel 30 sind im wesentlichen als senkrecht ausgerichtete, jedoch mit ihrem oberen Ende 32 leicht nach vorn geneigte Metallaschen ausgebildet. Die von der Schwenkachse 28 aus gesehen unteren Enden 34 der Hubhebel 30 sind durch eine Anhängeplatte 36, die einen Anhängehaken 38 trägt, miteinander verbunden (Fig. 3). Das jeweils obere Ende 32 der Hubhebel 30 enthält eine Gelenkstelle 40, an der jeweils ein laschenförmiges erstes Verbindungsglied 42 angelenkt ist.

Oberhalb des Getriebegehäuses 10 sind im Bereich der beiden Seitenbegrenzungen des Getriebegehäuses 10 zwei knieförmige Hubarme 44 auf einer ortsfesten horizontalen Achse 46 schwenkbar gelagert. Jeweils ein Schenkel 48 des Hubarmes 44 steht mit der Kolbenstange 50 eines zugehörigen Hydraulikzylinders 52 derart in Verbindung, daß sich der Hubarm 44 durch Betätigung des Hydraulikzylinders 52 um die Achse 46 verschwenken läßt. An Stelle der knieförmigen Hubarme 44 können auch gestreckte Hubarme verwendet werden, die unmittelbar durch eine antreibbare Hubwelle verschwenkbar sind.

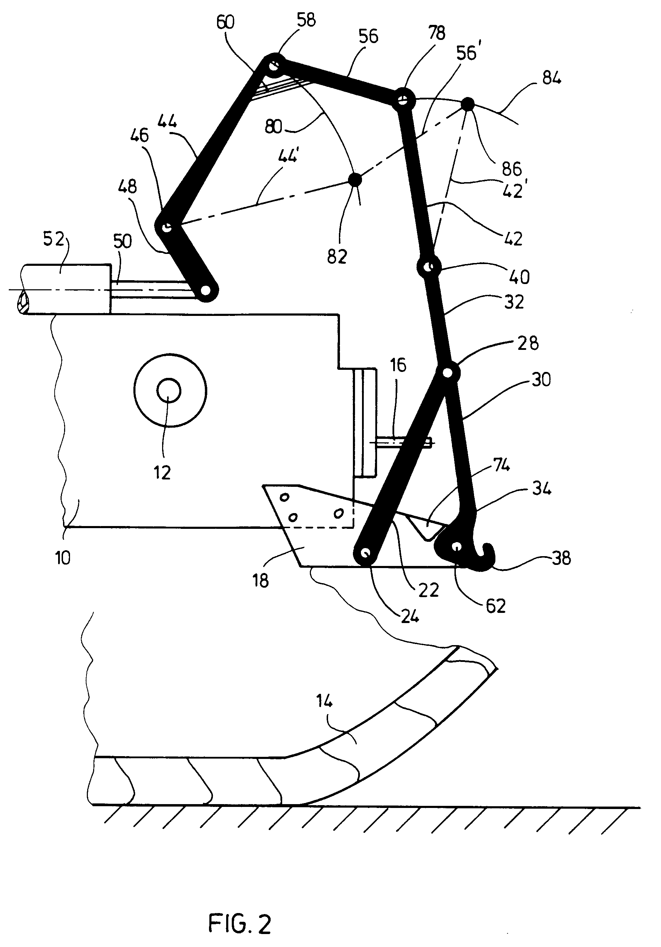

Das jeweils andere Ende 54 der Hubarme 44 ist gelenkig mit je einem laschenförmigen zweiten Verbindungsglied 56 verbunden, welches seinerseits mit dem zugehörigen ersten Verbindungsglied 42 in gelenkiger Verbindung steht. Im Bereich der Gelenkstelle 58 ist an jedem der Hubarme 44 ein Anschlag 60 befestigt, der in Richtung des zweiten Verbindungsgliedes 56 weist und dessen Länge so bemessen ist, daß der Verschwenkwinkel zwischen dem Hubarm 44 und dem zweiten Verbindungsglied 56 auf ein vorbestimmtes Maß begrenzt ist, wie es aus Fig. 2 hervorgeht.

In der Anhängeplatte 36 sind beidseits des Anhängehakens 38 je ein Sicherungsbolzen 62 gelagert, die durch eine Schraubenfeder 64 voneinander weg nach außen gedrückt werden. Jeder Sicherungsbolzen 62 trägt an seinem inneren Ende ein Befestigungsteil 66, 68, an denen ein Bowdenzug 70 angreift. In entspanntem Zustand ragen die äußeren Enden der Sicherungsbolzen 62 über die Seitenflächen der Anhängeplatte 36 hinaus. Durch Betätigung des Bowdenzuges 70 lassen sich die beiden Sicherungsbolzen 62 jedoch gegen die Kraft der Schraubenfeder 64 zur Mitte bewegen, so daß ihre äußeren Enden nicht mehr über die Seitenflächen der Anhängeplatte 36 vorstehen. Die Sicherungsbolzen 62 ermöglichen eine Arretierung der Anhängeplatte 36 und damit auch des Anhängehakens 38 an den Halteplatten 18, indem die Sicherungsbolzen in entsprechende Bohrungen 72 in den Halteplatten 18 eingreifen, wie dies aus Fig. 3 hervorgeht. Durch Ziehen am Bowdenzug 70 werden die Sicherungsbolzen 62 eingezogen und die Arrtierung aufgehoben.

Zwischen den Halteplatten 18 ist ein Anschlag 74 vorgesehen, an den sich die Rückseite des Anhängehakens 38 beim Erreichen seiner Arretierstellung anlegt. Dieser Anschlag 74 verhindert ein Verdrehen des Anhängehakens 38 im Uhrzeigersinn ( Fig. 1).

In Fig. 1 ist der Hubmechanismus in einer Lage dargestellt, in der der Anhängehaken 38 in seine tiefste Stellung auf den Boden abgesenkt ist. Durch Ausfahren der Kolbenstangen 50 aus den Hydraulikzylindern 52 werden die Hubarme 44 entgegen dem Uhrzeigersinn um die Achse 46 verdreht. Sie ziehen dabei mit ihren freien Enden 54 über die zweiten und ersten Verbindungsglieder 56, 42 die Hubhebel 30 und mit ihnen die Anhängeplatte 36 und den Anhängehaken 38 schräg nach vorn und oben. Dabei liegen die Verbindungsglieder 56, 42 und der Hubhebel 30 in einer fluchtenden Linie, die durch die Lagen der Gelenkstelle 40 und 58 festgelegt ist. Die Gelenkstelle 58 bewegt sich auf einem Kreisbogen um die Achse 46 und strebt damit eine zunehmend steilere Ausrichtung der Verbindungsglieder 42, 56 und der Hubhebel 30 beim Anheben an.

Die Schwenkachse 28 der Hubhebel 30 wird beim Anheben auf einer Kreisbahn, deren Durchmesser durch die Länge der Abstandshalter 22 gegeben ist, nach oben bewegt. Durch diese der Kreisbahn folgende Bewegung einerseits und durch die Bewegungsbahn der Gelenkstelle 58 andererseits wird die in Vorwärtsrichtung weisende Bewegungskomponente beim Anheben kompensiert. Durch die Resultierende dieser Bewegungen folgt der Anhängehaken 38 einer Hubkurve 76, die zunächst im wesentlichen senkrecht nach oben verläuft.

Erst wenn der Abstandshalter 22 die waagerechte Lage weit überschritten hat, beginnt sich der Anhängehaken 38 in horizontaler Richtung nach vorn zu bewegen, wobei die Drehung des Hubhebels 30 im Uhrzeigersinn stärker beschleunigt wird. Dieser Effekt wird bei einer bestimmten Hubhöhe verstärkt, bei der der Winkel zwischen den Hubarmen 44 und den zweiten Verbindungsgliedern 56 so klein geworden ist, daß sich die Anschläge 60 gegen die zweiten Verbindungsglieder 56 anlegen und die Gelenkstellen 58 starrsetzen.

Infolge der Wirkung der Anschläge 60 liegt bei einem weiteren Anheben der Fluchtpunkt der durch die Hubhebel und Verbindungsglieder gebildeten Linie nicht mehr in den Gelenkstellen 58, die beim Anheben eine Kreisbahn um die Achse 46 beschreiben, sondern in den Verbindungsstellen 78 zwischen den ersten und zweiten Verbindungsgliedern 42, 56. Diese Verbindungsstellen 78 beschreiben beim weiteren Anheben eine Kreisbahn um die Achse 46. Die Ausrichtung der Hubhebel 30 wird somit im oberen Anhebebereich beim Anheben rasch steiler, so daß der Anhängehaken 38 nach hinten auf einer im wesentlichen in die Horizontale einmündenden Hubkurve 76 geschwenkt wird.

Erreicht der Anhängehaken 38 schließlich seine Arbeitsposition, werden die Arretierbolzen 62 über den Bowdenzug 70 entriegelt und durch die Schraubenfeder 64 in die Bohrungen 72 geschoben. Durch Einrasten der Sicherungsbolzen 62 in die Halteplatten 18 wird der Anhängehaken 38 arretiert. Die Arretierstellung ist in Fig. 2 und zur Verdeutlichung durch strichpunktierte Linien in Fig. 1 dargestellt.

Im Betrieb nehmen die beiden Arretierbolzen 62 sowohl die Zug- als auch die Stützkräfte des geschleppten Gerätes auf. Dadurch bleiben die Hubarme 44, Verbindungsglieder 42, 56 und Hubhebel 30 während des Abschleppens unbelastet. Damit können in der Arretierstellung die Hubarme 44 zur Betätigung anderer Arbeitsorgane, beispielsweise Lenker, verwendet werden, ohne daß die Verbindungsglieder 42, 56 oder die Hubhebel 30 gelöst werden müssen. Die Verbindungsglieder 42, 56 ermöglichen ein Ausknicken, bei dem keine Kraft von den Hubarmen 44 auf die Hubhebel 30 übertragen wird.

Dieses Ausknicken ist in Fig. 2 durch strichpunktierte Linien angedeutet. Die Gelenkstelle 58 bewegt sich auf der Kreisbahn 80 nach unten, beispielsweise bis zu dem Punkt 82. Gleichzeitig bewegt sich die Verbindungsstelle 78 auf einer Kreisbahn 84 um die Gelenkstelle 40, bis sie die Lage 86 erreicht. Die strichpunktierten Linien 44', 56' und 42' veranschaulichen die neuen Lagen der Hubarme und der Verbindungsglieder.

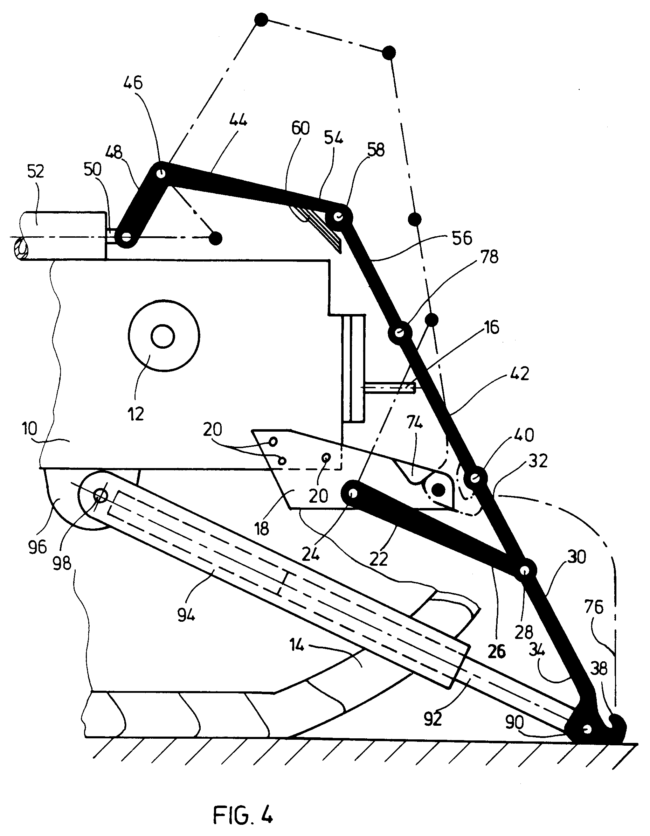

Aus Fig. 4 geht eine Anhängevorrichtung hervor, die sich gegenüber der in Fig. 1 dargestellten dadurch unterscheidet, daß der Anhängehaken 38 über eine Achse 90 gelenkig an dem unteren Ende 34 des Hubhebels 30 angelenkt ist. Der Anhängehaken 38 ist mit einer Stange 92 verbunden, die gleitbar in einer Führung 94 aufgenommen wird, so daß ein Ausknicken zwischen Führung 94 und Stange 92 vermieden wird. Die Führung 94 ist in einer am Getriebegehäuse 10 befestigten Konsole 96 um eine Achse 98 schwenkbar gelagert. Beim Anheben des Anhängehakens 38 durch den Hubarm 44, die Verbindungsglieder 56, 42 und den Hubhebel 30 wird die Führung 94 und die Stange 92 um die Achse 98 verschwenkt. Dabei verschiebt sich die Stange 92 innerhalb der Führung 94, um die sich ergebende Abstandsänderung zwischen den Achsen 90 und 98 auszugleichen.

Zweckmäßigerweise wird je eine Führung 94 mit Stange 92, wie sie anhand der Fig. 4 beschrieben wurden, auf beiden Fahrzeugseiten angebracht. Diese Anordnung ermöglicht eine stabile Führung des Anhängehakens 38 und verhindert insbesondere dessen seitliches Ausbrechen.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen. Wesentlich bei der vorliegenden Erfindung ist es, daß eine Zwangsführung des Anhängehakens 38 auf einer gewünschten Hubkurve 76 erfolgt, die durch den Konstrukteur weitgehend frei vorgegeben werden kann. Die gewünschte Hubkurve 76 kann dadurch eingestellt werden, daß das obere Ende des Hubhebels 30, insbesondere die Gelenkstelle 40, auf einer Kurvenbahn bewegt wird, die durch die gewünschte Hubkurve 76 des Anhängehakens 38 vorgegeben ist. Dieses Ziel läßt sich neben der anhand des Ausführungsbeispiels beschriebenen Lösung auch dadurch erreichen, daß die Gelenkstelle 40 durch einen nicht näher dargestellten Zapfen gebildet wird, dessen wenigstens eines Ende in einer der Kurvenbahn entsprechenden Kulisse eingreift.

## Patentansprüche

1. Anhängevorrichtung für Zugmaschinen, insbesondere für landwirtschaftliche oder Nutzfahrzeuge, zum Anhängen von Arbeitsgeräten mit Deichsel mit wenigstens einem an dem Fahrgestell (10) der Zugmaschine um eine horizontale Achse (24) verschwenkbar angelenkten Abstandshalter (22), an dessen freiem Ende (26) ein um eine horizontale Schwenkachse (28) verdrehbarer Hubhebel (30) mit seinem mittleren Bereich angreift, wobei der Bereich eines ersten Endes (34) des Hubhebels (30) mit einem höhenverstellbaren Anhängehaken (38) verbunden ist und der Hubhebel (30) im Bereich seines zweiten Endes (32) eine Gelenkstelle (40) aufweist, dadurch gekennzeichnet, daß an der Gelenkstelle (40) ein Hubmechanismus angreift, durch den sich das zweite Ende (32) des Hubhebels (30) im wesentlichen nach oben ziehen läßt.

2. Anhängevorrichtung nach Anspruch 1, dadurch gekennzeichnet, daß der Hubhebel (30) durch den Hubmechanismus so geführt wird, daß der Anhängehaken (38) beim Anheben von der tiefsten Position aus sich zunächst im wesentlichen senkrecht nach oben und kurz vor Erreichen seiner Arbeitshöhe zurück in seine Arbeitsposition bewegt.

3. Anhängevorrichtung nach Anspruch 1 oder 2, dadurch gekennzeichnet, daß der Hubmechanismus einen um eine horizontale Achse (46) verschwenkbaren Hubarm (44) aufweist, der mit seinem einen freien Ende (54) über wenigstens ein verschwenkbar angelenktes Verbindungsglied (42, 56) mit der Gelenkstelle (40) des Hubhebels (30) in Verbindung steht.

4. Anhängevorrichtung nach Anspruch 3, dadurch gekennzeichnet, daß das freie Ende (54) des Hubarmes (44) über wenigstens zwei gelenkig miteinander verbundene Verbindungsglieder (42, 56) mit der Gelenkstelle (40) des Hubhebels (30) verbunden ist.

5. Anhängevorrichtung nach Anspruch 3 und 4, dadurch gekennzeichnet, daß zwischen Hubarm (44) und einem mit diesem verbundenen Verbindungsglied (56) ein Anschlag (60) vorgesehen ist, der den Schwenkwinkel zwischen Hubarm (44) und Verbindungsglied (56) begrenzt.

6. Anhängevorrichtung nach einem der Ansprüche 3 bis 5, dadurch gekennzeichnet, daß der Hubarm (44) durch eine an seiner horizontalen Achse (46) angreifende Hubwelle betätigbar ist.

7. Anhängevorrichtung nach Anspruch 6, dadurch gekennzeichnet, daß die Hubwelle gleichzeitig der Betätigung von Lenkern dient.

8. Anhängevorrichtung nach einem der Ansprüche 3 bis 5, dadurch gekennzeichnet, daß die Achse (46) des Hubarmes (44) in dessen mittleren Bereich liegt und daß ein Ende (48) des Hubarmes (44) gelenkig mit einem Hydraulikzylinder (52) in Verbindung steht.

9. Anhängevorrichtung nach einem der Ansprüche 1 bis 8, dadurch gekennzeichnet, daß beidseits einer Zapfwelle (16) des Fahrzeuges wenigstens je ein Abstandshalter (22), ein Hubhebel (30), ein Hubarm (44) und wenigstens zwei Verbindungsglieder (42, 56) angeordnet sind.

10. Anhängevorrichtung nach einem der Ansprüche 1 bis 9, dadurch gekennzeichnet, daß die Gelenkstelle (40) auf einer Kurvenbahn geführt wird, die durch die gewünschte Hubkurve (76) des Anhängehakens (38) vorgegeben ist.

11. Anhängevorrichtung nach einem der Ansprüche 1 bis 10, dadurch gekennzeichnet, daß der Anhängehaken (38) an dem ersten Ende (34) des Hubhebels (30) um eine horizontale, quer zur Fahrtrichtung der Zugmaschine verlaufende Achse verschwenkbar angelenkt ist.
